# EUROPÄISCHE PATENTSCHRIFT

(11) **EP 1 766 353 B1**
(45) Veröffentlichungstag und Bekanntmachung des Hinweises auf die Patenterteilung: **21.09.2011**
(21) Anmeldenummer: 05759135.6
(22) Anmeldetag: 08.06.2005
(51) Int. Cl.: G01J 5/06, G01J 5/04

(54) **SENSOR**
SENSOR
CAPTEUR

(30) Priorität: 09.06.2004 DE 102004028022
(43) Veröffentlichungstag der Anmeldung: 28.03.2007
(73) Patentinhaber: Excelitas Technologies GmbH & Co. KG, 65199 Wiesbaden (DE)
(72) Erfinder: ERNST, Henrik, 56368 Katzenelnbogen (DE); KARAGÖZOGLU, Hermann, 65205 Wiesbaden (DE); HAUSNER, Martin, 65193 Wiesbaden (DE); LAUCK, Guido, 55411 Bingen (DE); SCHILZ, Jürgen, 65527 Niedernhausen (DE); PLOTZ, Fred, 65232 Taunusstein (DE)
(74) Vertreter: Beetz & Partner
(86) Internationale Anmeldenummer: PCT/EP2005/006158
(87) Internationale Veröffentlichungsnummer: WO 2005/121727

(56) Entgegenhaltungen:
- DE-A1- 2 233 820
- DE-A1- 2 233 820
- DE-A1- 19 710 946
- GB-A- 2 115 143
- US-A1- 2004 031 274
- US-A1- 2004 076 217
- US-B1- 6 435 711
- US-B1- 6 435 711
- LENEKE W ET AL: "THERMOPILE-ZEILEN-UND MATRIXSENSOR-ARRAYS FUER DIE POSITIONS-, ANWESENHEITS-UND BEWEGUNGSERKENNUNG" TECHNISCHES MESSEN TM, R.OLDENBOURG VERLAG. MUNCHEN, DE, Bd. 66, Nr. 3, März 1999 (1999-03), Seiten 104-108, XP000890600 ISSN: 0171-8096

## Beschreibung

Die Erfindung betrifft einen Sensor nach den Oberbegriffen des unabhängigen Patentanspruchs . Sie betrifft insbesondere Infrarotdetektoren mit verbessertem Verhalten bei Schwankungen der Umgebungstemperatur. Solche Sensorelemente und Sensoren sind aus der DE 197 10 946 und aus der EP 1 039 280 bekannt.

Insbesondere betrifft die Erfindung Strahlungssensoren, und vorzugsweise hierbei solche, die der Temperaturmessung mittels Infrarotstrahlungsmessung dienen. Die eigentlichen Sensorelemente sind dabei diejenigen Strukturen, auf die konkret die zu messende Infrarotstrahlung einfällt und die diese in bestimmter Weise in elektrisch verwertbare Signale, beispielsweise Strom, Spannung, Ladung, umsetzen. Es kann sich hierbei um Thermopiles oder auch um Pyrodetektoren oder Bolometer handeln.

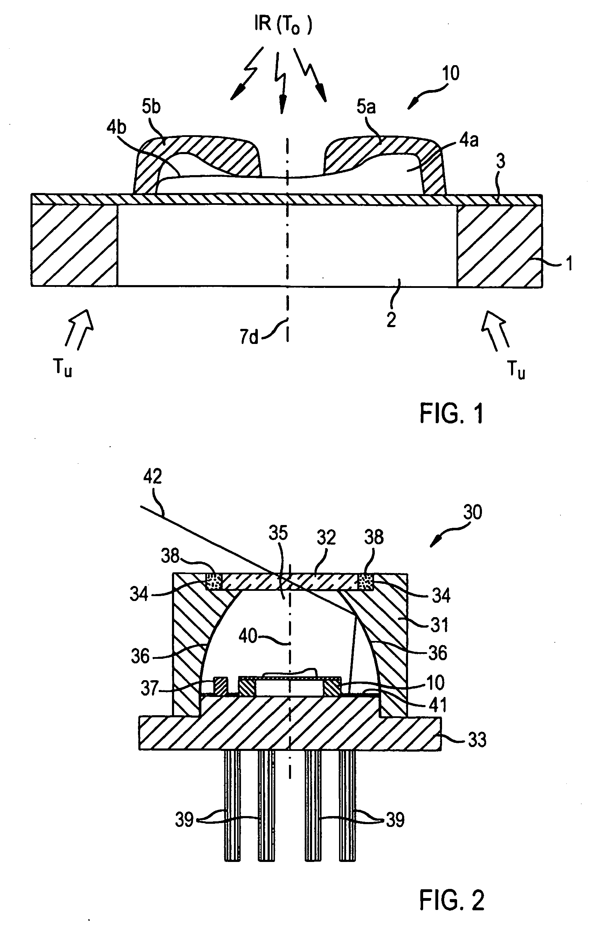

Insbesondere Thermopiles haben die Eigenschaft, dass ihr elektrisches Ausgangssignal nicht nur von der auf sie einfallenden elektromagnetischen Strahlung (im Infrarotbereich) abhängt, sondern auch von der Umgebungstemperatur, in der das Sensorelement arbeitet. Um die Sensorelemente von Wärmesenken und von der Umgebungstemperatur weitestmöglich abzukoppeln, werden Thermopiles auf thermisch schlecht leitenden Strukturen aufgebaut, wie sie beispielsweise in Fig. 1 gezeigt sind. Das eigentliche Sensorelement ist durch die Bezugsziffern 4 (4a, 4b) bezeichnet. Es weist ein warmes Ende 4a und ein kaltes Ende 4b auf. Über dem warmen Ende 4a kann eine Absorptionsschicht 5a liegen, die beispielsweise dunkel gefärbt ist, sodass in ihr die einfallende Infrarotstrahlung (symbolisiert durch IR(To)) besonders stark absorbiert wird und so zu einer Erwärmung des warmen Endes 4a führt. Es kann andererseits über dem kalten Ende 4b eine Reflexionsschicht 5b liegen, die die einfallende Infrarotstrahlung reflektiert, sodass sich das kalte Ende 4b entsprechend weniger erwärmt. Aus dem Temperaturunterschied zwischen kaltem und warmem Ende ergibt sich eine abgreifbare Spannungsdifferenz. Mehrere dieser Strukturen können in Serie geschaltet sein, sodass sich dementsprechend eine höhere Signalspannung ergibt.

Die Sensorelemente liegen auf einer dünnen Membran 3, die ihrerseits von einem als Rahmen ausgebildeten Träger 1 getragen wird. Die warmen Enden 4a liegen dabei regelmäßig nicht über dem Rahmen 1, sondern auf der Membran 3 über der Öffnung 2 des Rahmens 1. Dadurch ist das warme Ende 4a von der thermischen Masse des Rahmens 1 thermisch entkoppelt, sodass die einfallende Infrarotstrahlung eine vergleichsweise hohe Erwärmung und damit ein hohes Signal bewirken kann.

Wenn davon ausgegangen werden kann, dass die Umgebungstemperatur (symbolisiert durch Pfeile Tu unter dem Rahmen 1 des Sensorelements) konstant ist, ist es wünschenswert, die kalten Kontakte 4b über dem Rahmen 1 und, wenn und soweit dort vorhanden, auf der Membran 3, vorzusehen. Dann ist eine Erwärmung der kalten Kontakte durch die einfallende Infrarotstrahlung gering, da die kalten Kontakte mit der thermischen Masse des Rahmens 1 gekoppelt sind.

Wenn andererseits davon auszugehen ist, dass sich die Umgebungstemperatur schnell ändern kann, ist es vorzuziehen, die kalten Kontakte wie die warmen Kontakt nicht über dem Rahmen 1 vorzusehen, sondern - wie in Fig. 1 gezeigt - über der Öffnung 2 im Rahmen 1, sodass insoweit auch eine Entkopplung der kalten Kontakte von der sich ändernden Umgebungstemperatur erfolgt. Ein typisches Einsatzgebiet für Sensorelemente bzw. Sensoren bei sich ändernder Umgebungstemperatur ist das Gebiet der Klimatechnik. Dort können schnelle Temperatursprünge der Umgebungstemperatur auftreten, so dass auch der Sensor und seine Komponenten diese Umgebungstemperaturänderungen erfahren können.

Wenn die Temperaturverhältnisse des kalten Kontakts undefiniert sind oder sich ändern, leidet darunter die (mittelbare) Temperaturmessung über die (unmittelbare) Messung der Infrarotstrahlung, die nach Maßgabe einer Objekttemperatur To erzeugt wird.

Zur genauen Temperaturmessung sind die dynamischen Eigenschaften der Temperaturverteilung relevant. Hierzu schlägt die DE 197 10 946 vor, die Wärmekapazitäten der Kaltstellen und der Warmstellen sowie die Wärmeleitfähigkeit in der Umgebung der Kaltstellen und der Warmstellen in bestimmter, näher ausgeführter Weise auszugestalten. Eine unsymmetrische Anordnung der Warmstellen des Thermopile-Sensors bezüglich des Gehäuses wird vorgeschlagen, um lediglich die Bestrahlung der Warmstellen zu erreichen. Durch die aus der genannten Druckschrift bekannten Maßnahmen soll erreicht werden, dass die Beeinflussung der Kaltstellen durch den Umgebungstemperaturgang die gleiche ist wie diejenige der Warmstellen. Aus der EP 1 039 280 ist ein Infrarotsensor mit Thermopile-Sensor bekannt. Der Sensor weist eine Kappe auf, in der ein Fensterbauteil eingearbeitet ist. Von der Innenseite her ist das Fensterbauteil mit Kunststoff an der Kappe befestigt.

Die GB 2115143 beschreibt eine Anordnung für die Erfassung von Infrarotstrahlung. Ein Strahlungserfassungselement empfängt Strahlung von einer Fokussierlinse, die in einer Halterung angebracht ist. Die Dokumente US 2004/0031274 A1, US 2004/0076217A1, DE 2233820 sowie US 6 435 711 B1 beschreiben weitere Sensoren des Stands der Technik.

Es ist die Aufgabe der Erfindung, einen Sensor anzugeben, der gegen Änderungen der Umgebungstemperatur und gegen störende Signalquellen vergleichsweise unempfindlich ist.

Diese Aufgabe wird mit den Merkmalen des Anspruchs 1 gelöst. Abhängige Patentansprüche sind auf bevorzugte Ausführungsformen der Erfindung gerichtet.

Das Gehäuse eines Sensors kann eine Bodenplatte aufweisen, auf der das Sensorelement angebracht ist, sowie Seitenwände und eine Decke, wobei zumeist letztere ein Strahlungseintrittsfenster aufweist, durch das die zu erfassende Strahlung auf das Sensorelement im Inneren des Gehäuses fällt. Die Seitenwände und die Decke sind häufig ein einstückiges, zylinderähnliches Bauteil. Das Strahlungseintrittsfenster ist mit einem für die zu erfassende Strahlung durchlässigen Material verschlossen, das abbildende Eigenschaften hat (Linse, Fresnel-Linse, Phasenplatte). Dieses Material wird mit einer Befestigungseinrichtung so am Gehäuse befestigt, dass die Befestigungseinrichtung nicht im Gesichtsfeld des Sensorelements liegt. Vorzugsweise wird das Material des Strahlungseintrittsfensters außen am Gehäuse befestigt, sodass auch die Befestigungseinrichtung außen liegt, oder es wird in einer nach außen gerichteten Nut oder Vertiefung oder Gesenk des Gehäuses befestigt, insbesondere verklebt. Auf diese Weise verbleibt das stark strahlungsemittierende Befestigungsmaterial nicht im Gesichtsfeld des Sensorelements, sodass die von ihm ausgehende, auch umgebungstemperaturabhängige Strahlung das Messergebnis nicht verfälscht.

Die im Gesichtsfeld des Sensorelements liegenden Innenflächen im Gehäuse können gering emittierende Flächen sein.

Zusätzlich oder stattdessen können die im Gehäuseinneren im Gesichtsfeld des Sensorelements liegenden Innenflächen so geformt sein, dass keine oder nur wenig Strahlung von außen über die Innenflächen auf das oder die Sensorelemente reflektiert wird. Die Innenflächen können nach außen gewölbt, also konkav geformt sein. Aber auch konvexe Wölbungen sind möglich. Die Anordnung kann dabei insbesondere so sein, dass die Querschnittsfläche unmittelbar über dem Sensorelement größer ist als auf Höhe des Strahlungseintrittsfensters. Dadurch wird sichergestellt, dass von außen eintretende Umgebungsstrahlung, die eigentlich nicht auf das Sensorelement abgebildet werden soll, im Inneren des Gehäuses so reflektiert wird, dass es nicht auf das Sensorelement gelangt und so ebenfalls nicht die Temperaturmessung stört.

Der Sensor dient der Messung von Infrarotstrahlung bzw. der Temperaturmessung. Er kann bspw. in einem Thermometer etwa in der Klimatechnik angewendet werden. Ein Thermometer mit einem wie in dieser Beschreibung beschriebenen Sensor bzw. Sensorelement wird auch als Teil der Erfindung angesehen. Nachfolgend werden Bezug nehmend auf die beiliegenden Zeichnungen einzelne Ausführungsformen der Erfindung beschrieben, es zeigen:
Fig. 1 den Querschnitt durch ein Sensorelement, und
Fig. 2 den Querschnitt durch einen erfindungsgemäßen Sensor, .

Fig. 2 zeigt einen Sensor in einem Schnitt durch eine vertikale Ebene. Im Inneren des Sensors 30 ist ein Sensorelement 10 vorgesehen, das wärmeempfindlich ist, insbesondere für Infrarotstrahlung (λ > 800 nm, vorzugsweise > 2 µm). Es kann, muss aber nicht wie oben beschrieben ausgebildet sein. Es kann sich insbesondere um ein Thermopile-Sensorelement handeln. Neben dem Sensorelement 10 oder direkt auf dem Sensorelement angebracht befindet sich ein Temperaturreferenzelement 37, das die Umgebungstemperatur erfasst und in ein elektrisches Signal wandelt, das zur Auswertung und Kompensation herangezogen werden kann. Sensorelement 10 und gegebenenfalls Temperaturreferenzelement 37 befinden sich im Inneren eines Gehäuses, das in der gezeigten Ausführungsform eine Bodenplatte 33 aufweist, Seitenwände 31 und ein Strahlungseintrittsfenster 35, das von einem strahlungsdurchlässigen Material 32 verschlossen ist.

Das Gehäuse und insbesondere die Seitenwand 31 kann zylindrisch um eine Zylinderachse 40 herum aufgebaut sein. Das Strahlungseintrittsfenster 35 kann von einem Abbildungselement verschlossen sein, das aus strahlungsdurchlässigem Material 32 besteht. Das Abbildungselement lat sammelnde bzw. fokussierende Wirkung . Es Randelt sich um eine Phasenplatte, um eine Fresnel-Linse oder eine allgemeine Linse . Das strahlungsdurchlässige Material 32 ist mit einer nicht im Gesichtsfeld des Sensorelements 10 liegenden Befestigungseinrichtung 38 am Gehäuse befestigt. Erfindungsgemäβ ist die Befestigungseinrichtung ein Klebstoff oder ein allgemeiner Kunststoff mit vergleichsweise hoher Strahlungsemissivität, sodass dieser auch besonders stark Strahlungsänderungen bei Umgebungstemperaturänderungen hervorruft. Diese beeinflussen das Messsignal nicht, soweit die Befestigungseinrichtung sich außerhalb des Gesichtsfelds des Sensorelements 10 befindet.

Der Aufbau kann so sein, dass das Material des Strahleneintrittsfensters von außen am Gehäuse befestigt wird, sodass die Befestigungseinrichtung 38 ebenfalls außen liegt. Insbesondere kann das Material in eine Nut oder Vertiefung 34 an der Außenseite des Gehäuses eingelegt und darin verklebt werden, beispielsweise wie gezeigt zwischen der Seitenwand der Vertiefung 34 und der Seitenwand des Materials 32 durch einen Klebstoff oder Kunstharz oder allgemeinen Kunststoff 38. Dieser befindet sich dann nicht im Gesichtsfeld des Sensors 10, sodass er auch nicht zur Signalstörung durch abgegebene Strahlung beitragen kann.

In einer weiteren Ausführungsform der Erfindung können die im Gesichtsfeld des Sensorelements 10 liegenden Innenflächen 36 gering emittierend sein bzw. aus gering emittierendem Material bestehen, sodass sich Änderungen der Umgebungstemperatur, die auch das Gehäuse und insbesondere der zylindrische Teil 31 hiervon erfahren, nur in geringem Umfang durch Abstrahlung im Inneren des Sensors dem Sensorelement 10 mitteilen. Die Innenflächen können eine Emissivität von weniger als 10%, vorzugsweise weniger als 3% derjenigen eines idealen schwarzen Strahlers aufweisen.

In einer weiteren Ausführungsform können die Innenflächen 36, die im Gesichtsfeld des Sensorelements liegen, global konkav geformt sein. Hierbei kann die Gestaltung so sein, dass die Querschnittsfläche der Öffnung unmittelbar über dem Sensorelement 10 größer ist als die Querschnittsfläche des Strahlungseintrittsfensters 35, also so, dass sich die Innenflächen 36 vom Sensorelement 10 zum Strahlungseintrittsfenster 35 hin in Richtung Symmetrieachse 40 einziehen. Dadurch werden Strahlungskomponenten, die von jenseits des zu messenden Objekts stammen so reflektiert werden, dass sie nicht auf das Sensorelement 10 einfallen. Dies ist durch einen beispielhaften Strahlengang 42 angedeutet. Der Strahl wird an der schrägen Wand 36 so reflektiert, dass er nicht auf das Sensorelement 10 trifft, sondern auf einen Bodenbereich neben dem Sensorelement. Der Bodenbereich neben dem Sensorelement kann durch ein absorbierendes Material ("Sumpf") 41 belegt sein, sodass Mehrfachreflexionen nicht auftreten. Die Innenflächen 36 sind dabei dann spiegelnd ausgelegt.

Die Geometrie kann aber auch so sein, dass sie sich nach oben öffnet bzw. ausweitet, insbesondere wenn die im Gehäuseinneren im Gesichtsfeld des Sensorelements liegenden Innenflächen so geformt sind, dass keine oder nur wenig Strahlung von außen über die Innenflächen auf das oder die Sensorelemente reflektiert wird. Die Innenflächen können global nach außen gewölbt, also konkav geformt sein. Aber auch global konvexe Wölbungen sind möglich.

Die Innenflächen 36 können Flächen eines massiven Gehäusekörpers 31 sein, der beispielsweise als Drehteil gestaltet sein kann. Es kann sich aber auch beispielsweise um die verspiegelten Innenflächen 36 eines Spritzgrußteils handeln, das zur Erhöhung der mechanischen Stabilität gegebenenfalls noch mit einer metallischen Kappe überzogen werden kann, oder die Innenflächen 36 können durch ein separates Bauteil gebildet sein, das unabhängig vom äußeren Gehäuse in das Gehäuseinnere eingesetzt wird und jedenfalls aus Sicht des Sensorelements 10 die Innenwände 36 des Sensorinnenraums bildet.

39 sind die Anschlüsse des Sensors zur Ableitung der Signale des Sensorelements 10 und gegebenenfalls des Temperaturreferenzelements 37. Wenn es sich um einen Mehrelementsensor handelt, können dementsprechend mehrere elektrisch getrennt abfragbare Sensorelemente vorgesehen sein, die auf einer gemeinsamen Membran 3 über einem gemeinsamen Rahmen 1 oder auf einer Membran über separaten Gruben eines gemeinsamen Trägers angebracht sein können. Es können dann auch mehrere Anschlüsse vorgesehen sein. Zusammen mit dem Sensorelement oder Mehrfachsensorelementen können weiterhin elektronische Signalverarbeitungsschaltkreise entweder auf den Elementen selbst oder neben dem Sensorelement angebracht sein.

Insbesondere wie oben beschrieben kann das Gehäuse wärmeleitend sein. Es kann eine Wärmeleitfähigkeit aufweist, die mindestens 20%, vorzugsweise mindestens 50% derjenigen von reinem Kupfer beträgt.

Das das Strahlungseintrittsfenster 35 verschließende Element 32 kann eine vorzugsweise durch Ätzen gebildete Phasenplatte sein. Hier führen bereichsweise unterschiedliche Dicken, die zueinander konzentrisch angeordnet sind, zu Gangunterschieden der die Phasenplatte verlassenden Strahlungsteile, sodass aufgrund Überlagerung/Interferenz eine Sammlung der eintretenden Strahlung in gewisser Weise wellenlängenselektiv auf dem Sensorelement stattfindet. Das Element 32 kann auch eine Linse oder eine Fresnelllinse sein .

Der Sensor kann in seinen Außenabmessungen einem standardisierten Gehäuse entsprechen, bspw. einem TOS-Gehäuse, oder er kann ein solches Gehäuse aufweisen.

Das Sensorelement kann ein oder mehrere Thermopiles sein bzw. aufweisen. Diese haben kalte und warme Kontakte. Die warmen Kontakte können auf einer Membran über der Öffnung eines Rahmens liegen. Die kalten Kontakte können über der Öffnung des Rahmens oder auf bzw. über dem Rahmen liegen. Es können Absorptions- und/oder Reflexionsschichten wie Bezug nehmend auf Fig. 1 beschrieben vorgesehen sein.

## Patentansprüche

1. Sensor (30) zum Erfassen elektromagnetischer Strahlung insbesondere im IR-Bereich, mit einem oder mehreren Sensorelementen (10) zum Erfassen elektromagnetischer Strahlung,
einem Gehäuse (31, 33), in dem das sensorelement oder die meheren Sensorelemente ordnet ist oder sind, und
einem mit einem für die zu erfassende Strahlung durchlässigen Material (32) verschlossenen Strahlungseintrittsfenster (35) im Gehäuse, wobei das strahlungsdurchlässige Material (32) eine Linse oder eine Fresnel-Linse oder eine Phasenplatte bildet,
**dadurch gekennzeichnet, dass**
eine Befestigungseinrichtung (38) zur Befestigung des durchlässigen Materials (32) am Gehäuse (31, 33) vorgesehen ist, und
die Befestigungseinrichtung (38) ein Klebstoff oder ein Kunststoff ist und nicht im Gesichtsfeld des Sensorelements oder der meheren Sensorelemente (10) liegt.

2. Sensor nach Anspruch 1, **dadurch gekennzeichnet, dass** das Material des Strahlungseintrittsfensters von außen am Gehäuse oder in einer nach außen gerichteten Nut oder Vertiefung (34) des Gehäuses befestigt ist.

3. Sensor nach Anspruch 1 oder 2, **dadurch gekennzeichnet, daß** das Gehäuse wärmeleitend ist und insbesondere eine Wärmeleitfähigkeit aufweist, die mindestens 20%, vorzugsweise mindestens 50% derjenigen von reinem Kupfer beträgt.

4. Sensor (30) nach einem oder mehreren der vorherigen Ansprüche, **dadurch gekennzeichnet, dass** im Gehäuseinneren im Gesichtsfeld des Sensorelements (10) oder der Sensorelemente Innenflächen (36) liegen, deren Emissivität weniger als 10% derjenigen eines idealen schwarzen Strahlers beträgt.

5. Sensor nach Anspruch 4, **dadurch gekennzeichnet, dass** Innenflächen (36) spiegelnd sind.

6. Sensor (30) nach einem oder mehreren der Ansprüche 1 bis 5, **dadurch gekennzeichnet, dass** im Gehäuseinneren im Gesichtsfeld des Sensorelements (10) oder der Sensorelemente Innenflächen (36) liegen, die in einem vertikalen Schnitt global nach außen gewölbt sind,

7. Sensor nach Anspruch 6, **dadurch gekennzeichnet, dass** die Innenflächen (36) einen Innenraum definieren, dessen Querschnittsfläche am Strahlungseintrittsfenster (35) kleiner ist als unmittelbar über dem Sensorelement (10) oder der Sensorelementen

8. Sensor nach Anspruch 6, **dadurch gekennzeichnet, dass** die Innenflächen (36) nach oben hin zum Strahlungseintrittsfenster (35) konisch zulaufen.

9. Sensor nach Anspruch 6, **dadurch gekennzeichnet, dass** die Innenflächen (36) eine Zylinderoberfläche bilden.

10. Sensor nach einem oder mehreren der Ansprüche 1 bis 9, **dadurch gekennzeichnet, dass** das Gehäuse ein Drehteil (31) ist oder aufweist.

11. Sensor nach einem oder mehreren der Ansprüche 6 bis 10, **dadurch gekennzeichnet, dass** der Bereich im Gehäuseinneren neben dem Sensorelement (10) oder dem Sensorelementen mit einem strahlungsabsorbierenden Material (41) belegt ist.

12. Berührungsloses Temperaturmessgerät mit einem Sensor nach einem oder mehreren der Ansprüche 1 bis 11.

## Claims

1. A sensor (30) for sensing electromagnetic radiation, in particular in the IR range, including
one or plural sensor elements (10) for sensing electromagnetic radiation,
a housing (31, 33), in which the sensor element or the plural sensor elements is or are disposed, and
a radiation entry window (35) closed with a material (32) transparent to the radiation to be sensed in the housing, wherein the material (32) transparent to radiation constitutes a lens or a Fresnel lens or a phase plate,
**characterized in that**
an attachment means (38) for attaching the transparent material (32) to the housing (31, 33) is provided, and
the attachment means (38) is an adhesive or a plastic and is not located in the field of view of the sensor element or the plural sensor elements (10).

2. The sensor according to claim 1, **characterized in that** the material of the radiation entry window is externally attached to the housing or in an outwardly directed groove or recess (34) of the housing.

3. The sensor according to claim 1 or 2, **characterized in that** the housing is heat conducting and in particular has a heat conductivity that is at least 20 %, preferably at least 50 % of that of pure copper.

4. The sensor (30) according to one or more of the preceding claims, **characterized in that** inner surfaces (36) are in the housing interior in the field of view of the sensor element or the sensor elements (10), the emissivity of which is less than 10 % of that of an ideal black body.

5. The sensor according to claim 4, **characterized in that** inner surfaces (36) are reflective.

6. The sensor (30) according to one or more of claims 1 to 5, **characterized in that** inner surfaces (36) are in the housing interior in the field of view of the sensor element or the sensor elements (10), which are globally outwardly curved in a vertical section.

7. The sensor according to claim 6, **characterized in that** the inner surfaces (36) define an interior space, the cross-sectional surface of which is smaller at the radiation entry window (35) than immediately above the sensor element or the sensor elements (10).

8. The sensor according to claim 6, **characterized in that** the inner surfaces (36) taper upwardly towards the radiation entry window (35).

9. The sensor according to claim 6, **characterized in that** the inner surfaces (36) constitute a cylinder surface.

10. The sensor according to one or more of claims 1 to 9, **characterized in that** the housing is or has a rotary part (31).

11. The sensor according to one or more of claims 6 to 10, **characterized in that** the region in the housing interior besides the sensor element or the sensor elements (10) is occupied by a radiation absorbing material (41).

12. A contact-free temperature measuring device including a sensor according to one or more of claims 1 to 11.

## Revendications

1. Capteur (30) pour la détection du rayonnement électromagnétique, en particulier dans la plage des IR, comprenant
un ou plusieurs éléments de capteur (10) pour la détection du rayonnement électromagnétique,
un boîtier (31, 33) dans lequel est ou sont disposé(s) l'élément de capteur ou les multiples éléments de capteur, et
une fenêtre d'entrée du rayonnement (35) aménagée dans le boîtier et fermée à l'aide d'un matériau (32) transparent pour le rayonnement à détecter, où le matériau (32) transparent au rayonnement forme une lentille ou une lentille de Fresnel ou une lame de phases,
**caractérisé en ce que**
un système de fixation (38) pour fixer le matériau (32) transparent sur le boîtier (31, 33) est prévu, et
le système de fixation (38) est un adhésif ou un plastique et ne se situe pas dans le champ de vision de l'élément de capteur ou des multiples éléments de capteur (10).

2. Capteur selon la revendication 1, **caractérisé en ce que** le matériau de la fenêtre d'entrée du rayonnement est fixé depuis l'extérieur sur le boîtier ou est fixé dans une rainure ou une cavité (34) du boîtier dirigée vers l'extérieur.

3. Capteur selon la revendication 1 ou 2, **caractérisé en ce que** le boîtier est thermoconducteur et présente en particulier une thermoconductivité qui atteint au moins 20 %, de préférence au moins 50 %, de celle du cuivre pur.

4. Capteur (30) selon une ou plusieurs des revendications précédentes, **caractérisé en ce que** des surfaces internes (36), dont l'émissivité atteint moins de 10 % de celle d'un émetteur noir idéal, se situent à l'intérieur du boîtier dans le champ de vision de l'élément de capteur (10) ou des éléments de capteur.

5. Capteur selon la revendication 4, **caractérisé en ce que** les surfaces internes (36) sont réfléchissantes.

6. Capteur (30) selon une ou plusieurs des revendications 1 à 5, **caractérisé en ce que** des surfaces internes (36), qui sont bombées globalement vers l'extérieur en coupe verticale, se situent à l'intérieur du boîtier dans le champ de vision de l'élément de capteur (10) ou des éléments de capteur.

7. Capteur selon la revendication 6, **caractérisé en ce que** les surfaces internes (36) définissent un espace intérieur, qui présente une surface en section transversale plus petite au niveau de la fenêtre d'entrée du rayonnement (35) que directement au-dessus de l'élément de capteur (10) ou des éléments de capteur.

8. Capteur selon la revendication 6, **caractérisé en ce que** les surfaces internes (36) sont convergentes en adoptant une forme conique vers le haut en direction de la fenêtre d'entrée du rayonnement (35).

9. Capteur selon la revendication 6, **caractérisé en ce que** les surfaces internes (36) forment une surface cylindrique.

10. Capteur selon une ou plusieurs des revendications 1 à 9, **caractérisé en ce que** le boîtier est ou présente une pièce rotative (31).

11. Capteur selon une ou plusieurs des revendications 6 à 10, **caractérisé en ce que** la zone située à l'intérieur du boîtier à côté de l'élément de capteur (10) ou des éléments de capteur est recouverte d'un matériau (41) absorbant les rayonnements.

12. Appareil de mesure de la température sans contact muni d'un capteur selon une ou plusieurs des revendications 1 à 11.
